# EUROPÄISCHE PATENTSCHRIFT

(11) **EP 4 325 097 B1**
(45) Veröffentlichungstag und Bekanntmachung des Hinweises auf die Patenterteilung: **08.10.2025**
(21) Anmeldenummer: 22191246.2
(22) Anmeldetag: 19.08.2022
(51) Int. Cl.: F16K 5/04, F16K 11/085

(54) **ROTATIONSVENTIL**
ROTARY VALVE
SOUPAPE ROTATIVE

(43) Veröffentlichungstag der Anmeldung: 21.02.2024
(73) Patentinhaber: TI Automotive Technology Center GmbH, 76437 Rastatt (DE)
(72) Erfinder: Göller, Johannes, 74679 Crispenhofen (DE); Winter, Matthias, 76227 Karlsruhe (DE)
(74) Vertreter: Novagraaf Group

(56) Entgegenhaltungen:
- EP-A1- 4 008 935
- WO-A1-2022/184915
- DE-B3- 102015 000 424
- US-A1- 2022 090 691

## Beschreibung

Die Erfindung betrifft ein Rotationsventil, umfassend ein Ventilgehäuse mit einer Ventilkammer, wobei die Ventilkammer zumindest eine Kammerwand aufweist, in die zumindest zwei Fluidöffnungen eingebracht sind, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch in der Ventilkammer gelagert ist.

Ein derartiges Rotationsventil ist beispielsweise aus der DE 10 2018 009 680 A1 bekannt. Rotationsventile der genannten Art finden häufig in Kühlkreisläufen zur Steuerung des Kühlmittelstroms Einsatz. Durch die in das Ventilgehäuse eingebrachten Fluidöffnungen kann ein Kühlfluid ein- und ausströmen. Die in den Ventilkern eingebrachte Kanalstruktur steuert dabei den Kühlmittelstrom, wobei je nach Ausgestaltung und Anzahl der Fluidöffnungen unterschiedliche Kühlkreisläufe angesteuert, der Volumenstrom reguliert oder die Durchflussrichtung angepasst werden können.

Die Ausgestaltung als Rotationsventil ist dabei vorteilhaft, weil eine Anpassung des Kühlmittelstroms durch Drehen des Ventilkerns erfolgt, wobei der entsprechende Aktor zum Drehen des Ventilkerns einfach ausgebildet und einfach ansteuerbar ist. Dementsprechend sind Rotationsventile und die dazugehörigen Aktoren kostengünstig herstellbar. Darüber hinaus benötigen Rotationsventile nur wenig Bauraum.

Derartige Rotationsventile sind insbesondere vorteilhaft in Bezug auf den Einsatz in Temperierkreisläufen im Bereich der Elektromobilität. Zur Erzielung einer hohen Reichweite von Elektrofahrzeugen ist es beispielsweise erforderlich, elektrische Komponenten zu temperieren. Zu temperierende Komponenten von Elektrofahrzeugen sind dabei insbesondere elektrische Energiespeicher, aber auch die Leistungselektronik oder Steckverbindungen von Schnellladeeinrichtungen. Ein elektrischer Energiespeicher hat eine bestmögliche Kapazität nur in einem sehr kleinen Temperaturspektrum. Daher ist es erforderlich, elektrische Energiespeicher von Elektrofahrzeugen bei tiefen Umgebungstemperaturen zu erwärmen und bei hohen Außentemperaturen oder bei hohen Lastwechseln zu kühlen.

Hierzu ist es bekannt, einen Temperierkreislauf vorzusehen, durch welchen ein Temperiermedium strömt. Das Temperiermedium kann dabei je nach Anforderung entweder in einer Heizeinrichtung erwärmt oder in einer Kühleinrichtung abgekühlt werden. Die Steuerung des Temperiermediumstroms erfolgt dabei zumindest teilweise über ein Rotationsventil. Dabei kann sich das Erfordernis komplexer Kanalstrukturen des Ventilkerns ergeben.

Die DE 10 2015 000 424 B3 zeigt ein Ventil, bei dem der Ventilkörper von einem Hohlzylinder konzentrisch umschlossen ist. Die US 2022/0090691 A1 zeigt ein Ventil mit einem mehrteiligen Ventilkern, wobei die Elemente des Ventilkerns axial übereinander angeordnet sind. Die EP 4 008 935 A1 zeigt ein Rotationsventil mit einem mehrteiligen Ventilgehäuse. Die WO 2022/184 915 A1 zeigt ein Rotationsventil mit einem zweiteilig ausgebildeten Ventilkern.

Der Erfindung liegt die Aufgabe zugrunde, ein Rotationsventil bereitzustellen, welches kostengünstig herstellbar ist und welches eine komplexe Steuerung von Temperierkreisläufen ermöglicht.

Diese Aufgabe wird mit den Merkmalen von Anspruch 1 gelöst. Auf vorteilhafte Ausgestaltungen nehmen die Unteransprüche Bezug.

Das erfindungsgemäße Rotationsventil umfasst ein Ventilgehäuse mit einer Ventilkammer, wobei die Ventilkammer zumindest eine Kammerwand aufweist, in die zumindest zwei Fluidöffnungen eingebracht sind, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch in der Ventilkammer gelagert ist, wobei der Ventilkern zumindest zweiteilig ausgebildet ist.

Durch die zumindest zweiteilige Ausgestaltung des Ventilkerns ist es möglich, komplexe Kanalstrukturen in dem Ventilkern zu realisieren, wobei der Ventilkern gleichzeitig einfach und kostengünstig herstellbar ist.

Der Ventilkern weist zumindest ein Innenteil und ein Außenteil auf, wobei das Außenteil das Innenteil zumindest teilweise umfangsseitig umgibt. Bei dieser Ausgestaltung ist das Innenteil innerhalb des Außenteils, beispielsweise in das Außenteil gesteckt, was die Ausgestaltung einer besonders komplexen Kanalstruktur insbesondere im Innenteil ermöglicht. Das Außenteil steht hingegen im Kontakt mit der Kammerwand der Ventilkammer und kann so ausgebildet sein, dass es eine besonders gute Abdichtung gegenüber der Kammerwand verwirklicht.

Es ist denkbar, dass mehrere Innenteile vorgesehen sind. Dabei können mehrere Innenteile schachtelartig ineinandergesteckt sein. Alternativ ist auch denkbar, dass mehrere Innenteile vorgesehen sind, welche sich jeweils über ein Kreissektor erstrecken, wobei mehrere Innenteile über den Umfang verteilt nebeneinander angeordnet sind. Bei beiden Ausgestaltungen können besonders komplexe Kanalstrukturen kostengünstig ausgebildet werden. Gemäß einer weiteren Alternative können auch mehrere Innenteile ineinandergesteckt und weitere Innenteile nebeneinander angeordnet sein.

Das Außenteil ist als Hülse ausgebildet und das zumindest eine Innenteil aufnehmen. Bei dieser Ausgestaltung kann das Außenteil das Innenteil in Umfangsrichtung zumindest teilweise abdecken, sodass das Innenteil besonders gut gegen Beschädigungen geschützt ist. Insbesondere kann verhindert werden, dass sich das Innenteil an der Kammerwand verkantet. Durch das als Hülse ausgebildete Außenteil ist das Innenteil besonders gut gegen Beschädigungen geschützt, insbesondere während der Montage. Das Außenteil kann bei dieser Ausgestaltung auch flächig an der Kammerwand der Ventilkammer zur Anlage gelangen, sodass die Gefahr von inneren Leckagen innerhalb des Rotationsventils reduziert werden kann.

Zur Verbesserung der Abdichtung kann die Kammerwand zumindest abschnittsweise mit einer elastischen Beschichtung, beispielsweise aus elastomerem Material, versehen sein.

Das zumindest eine Innenteil ist rippenartig ausgebildet. Dadurch kann das Innenteil besonders leicht und materialsparend ausgebildet werden und das Innenteil kann auf die Transportfunktion der Kanalstruktur optimiert sein. Dabei kann die außenumfangsseitige Wandung der in dem Innenteil ausgebildeten Kanäle durch das Außenteil ausgebildet sein, was die Herstellung des Innenteils vereinfacht. Erfindungsgemäß ist das Innenteil aus Kunststoff ausgebildet. Daher kommt für die Herstellung insbesondere das Spritzgießen in Betracht. Durch eine rippenartige Ausgestaltung des Innenteils ist es darüber hinaus möglich, besonders komplexe Kanalstrukturen in dem Ventilkern zu realisieren.

In das Außenteil können Durchbrechungen eingebracht sein. Die Durchbrechungen stehen je nach Stellung des Ventilkerns mit den Fluidöffnungen in Kontakt und ermöglichen einen Durchgang von Temperiermedium über die Fluidöffnungen in die Kanalstruktur des Innenteils.

Die Kanalstruktur kann in dem zumindest einen Innenteil ausgebildet sein. Dabei ist die Kanalstruktur durch das Außenteil geschützt und es kann eine besonders komplexe Kanalstruktur realisiert werden.

Das zumindest eine Innenteil und das Außenteil können stoffschlüssig miteinander verbunden sein. Hierzu können das zumindest eine Innenteil und das Außenteil mit einem Klebemittel miteinander verbunden sein. Vorzugsweise sind das zumindest eine Innenteil und das Außenteil über eine Schweißverbindung, beispielsweise mittels Laserschweißen oder Ultraschallschweißen miteinander verbunden. Die Schweißverbindung kann dabei linienartig ausgebildet sein und beispielsweise um die Durchbrechungen herum angeordnet sein. Denkbar ist zudem, dass die um die Durchbrechung herum angeordnete Schweißverbindung zurückgesetzt ist, so dass die Schweißnaht die Dichtfunktion zwischen Ventilkern und Ventilgehäuse nicht beeinträchtigt. Durch die stoffschlüssige Verbindung bilden Innenteil und Außenteil einen festen Verbund, sodass ein sicherer und dauerhafter Betrieb des Rotationsventils gewährleistet ist.

Das zumindest eine Innenteil und das Außenteil können formschlüssig miteinander verbunden sein. Bei dieser Ausgestaltung sind Innenteil und Außenteil besonders schnell und einfach miteinander verbindbar. Es ist auch denkbar, Innenteil und Außenteil sowohl stoffschlüssig als auch formschlüssig miteinander zu verbinden.

Das zumindest eine Innenteil und das Außenteil können fluiddicht miteinander verbunden sein. Dadurch kann ein Überströmen einer Flüssigkeit von einem Kanal der Kanalstruktur des Innenteils in einen anderen Kanal der Kanalstruktur verhindert werden.

Das Außenteil des Ventilkerns kann zumindest abschnittsweise dichtend an der Kammerwand der Ventilkammer anliegen. Dadurch kann verhindert werden, dass innerhalb der Ventilkammer Leckagen entstehen, was die Funktionsfähigkeit des Rotationsventils beeinträchtigen kann.

Dem Außenteil und/oder dem Innenteil kann eine Dichtkontur zugeordnet sein. Die Dichtkontur ist dabei vorzugsweise außenseitig im Bereich der Durchbrechungen des Außenteils angeordnet und kann beispielsweise entlang der umlaufenden Kanten der Durchbrechungen ausgebildet sein. Die Dichtkontur kann dabei ein gesondertes Bauelement darstellen oder direkt an das Außenteil angeformt sein. Es ist insbesondere denkbar, die Dichtkontur aus thermoplastischem Elastomer auszubilden und dieses direkt mit dem Außenteil auszuformen. Ebenfalls denkbar ist, die Dichtkontur als Dichtring oder Dichtlippe auszugestalten. Weiterhin kann die Dichtkontur in einer in dem Außenteil ausgeformten Nut angeordnet sein.

In alternativen Ausgestaltungen sind das Ventilgehäuse und der Ventilkern konisch ausgebildet. Des Weiteren ist denkbar, dass das Außenteil mit einer Kanalstruktur versehen ist. Ferner ist denkbar, mehrere Außenteile ineinander anzuordnen, wobei ein Außenteil ein weiteres Außenteil aufnimmt. Das Außenteil kann mehrteilig ausgebildet sein, insbesondere kreissektorartig. In diesem Zusammenhang ist insbesondere denkbar, dass das Außenteil zwei Halbschalen umfasst.

Eine Ausgestaltung des erfindungsgemäßen Rotationsventils wird nachfolgend anhand der Figuren näher erläutert. Die Figuren zeigen, jeweils schematisch:
- Fig. 1: ein Rotationsventil;
- Fig. 2: im Detail den Ventilkern des Rotationsventils;
- Fig. 3: im Detail das Innenteil des Ventilkerns;
- Fig. 4: das Außenteil des Ventilkerns;
- Fig. 5: eine weitere Ausgestaltung eines Ventilkerns;
- Fig. 6: einen Ventilkern, bei welchem Innenteil und Außenteil verschweißt sind.

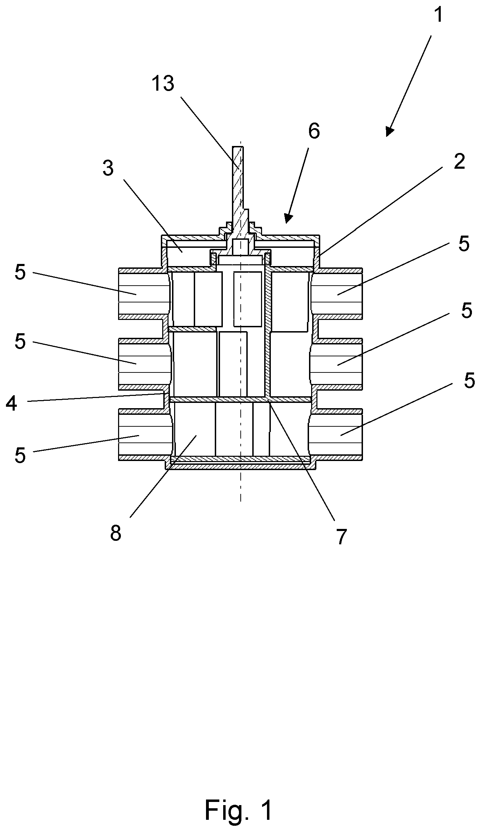

Figur 1 zeigt ein Rotationsventil 1, welches einen Bestandteil eines Temperierkreislaufs einer zu klimatisierenden Inneneinrichtung bildet. Vorliegend gelangt das Rotationsventil 1 in elektromobilen Anwendungen als Bestandteil des Temperierkreislaufs eines Elektrofahrzeugs zum Einsatz. Das Rotationsventil 1 ist dabei in einen Temperierkreislauf eines elektromotorischen Antriebs eines Elektrofahrzeugs eingebunden und lenkt Volumenströme des in den Temperierkreislauf geführten Mediums zu den elektrischen Energiespeichern und Elektromotoren sowie zur Leistungselektronik. Durch das Rotationsventil 1 können die Temperiermittelströme des Temperierkreislaufs modifiziert werden.

Insbesondere ist es denkbar, den Volumenstrom des Temperiermittels zu modifizieren, beispielsweise zu vergrößern oder zu verkleinern. Des Weiteren kann durch Drehung des Ventilkerns 7 unterschiedliche Fluidöffnungen 5 strömungsleitend verbunden und so die Strömungsrichtung des Temperiermittels geändert werden. Insofern bildet das erfindungsgemäße Rotationsventil 1 auch ein Wegeventil, durch das verschiedene Komponenten der zu temperierenden Einrichtungen einzeln und gezielt mit Temperiermedium versorgt und bedarfsweise auch vom Temperiermittelstrom getrennt werden können.

Je nach Umgebungstemperatur und Leistungsanforderung können beispielsweise ein Temperiermittelstrom zunächst ausschließlich zu den elektrischen Energiespeichern geleitet werden und dort je nach Umgebungstemperaturen die elektrischen Energiespeicher kühlen oder erwärmen. Bei hohen Leistungsanforderungen kann ein Kühlmittelstrom zu der Leistungselektronik und auch zu den Elektromotoren geleitet werden, um diese Komponenten zu kühlen. Die Modifikation des Kühlmittelstroms erfolgt dabei mittels des Rotationsventils 1. Dabei kann das Rotationsventil 1 mehrere Magnetventile ersetzen, sodass der Temperierkreislauf insgesamt kostengünstig herstellbar ist.

Figur 1 zeigt ein Rotationsventil 1 mit einem aus Kunststoff ausgebildeten Ventilgehäuse 2, in dem eine Ventilkammer 3 angeordnet ist. Die Ventilkammer 3 weist eine Kammerwand 4 auf, in die mehrere Fluidöffnungen 5 eingebracht sind. Die Ventilkammer 3 weist stirnseitig eine Aufnahmeöffnung 6 auf und die Ventilkammer 3 nimmt einen Ventilkern 7 auf. Die Aufnahmeöffnung 6 ist mit einem Deckel versehen, in den eine Durchführung für die Antriebswelle 13 eingebracht ist. Der Ventilkern 7 ist mit einer Kanalstruktur 8 versehen, welche mit den Fluidöffnungen 5 zusammenwirkt. Der Ventilkern 7 ist rotatorisch in der Ventilkammer 3 gelagert und mit einer Antriebswelle 13 versehen, über die der Ventilkern 7 durch einen Aktor in Rotation versetzbar ist.

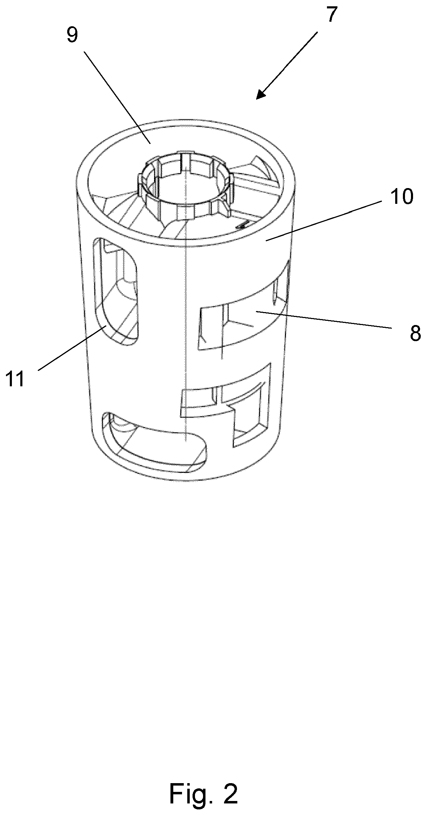

Figur 2 zeigt im Detail den Ventilkern 7 des Rotationsventils 1 gemäß Figur 1. Der Ventilkern 7 weist ein Innenteil 9 und ein Außenteil 10 auf, wobei das Außenteil 10 das Innenteil 9 umfangsseitig umgibt. Das Außenteil 10 ist als Hülse ausgebildet und nimmt das Innenteil 9 auf. Das Innenteil 9 und das Außenteil 10 sind aus Kunststoff ausgebildet.

In das Außenteil 10 sind Durchbrechungen 11 eingebracht. Die Kanalstruktur 8 ist in dem Innenteil 9 ausgebildet. Über die in das Außenteil 10 eingebrachten Durchbrechungen 11 steht die Kanalstruktur 8 wahlweise in Kontakt mit einer oder mehreren Fluidöffnungen 5.

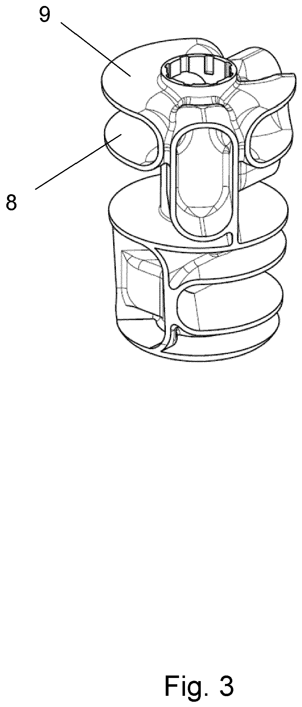

Figur 3 zeigt im Detail das Innenteil 9 des in Figur 2 gezeigten Ventilkerns 7. Es ist zu erkennen, dass das Innenteil 9 rippenartig ausgebildet ist. Das Innenteil 9 ist aus Kunststoff ausgebildet und mittels Spritzgießen hergestellt. Je nach Ausgestaltung der Kanalstruktur 8 ist es denkbar, das Innenteil 9 mehrteilig auszubilden, wobei mehrere Innenteile 9 ineinandergesteckt und/oder mehrere Innenteile 9 kreissektorartig und in Umfangsrichtung betrachtet nebeneinander angeordnet sein können. In dem Innenteil 9 ist die Kanalstruktur 8 ausgebildet.

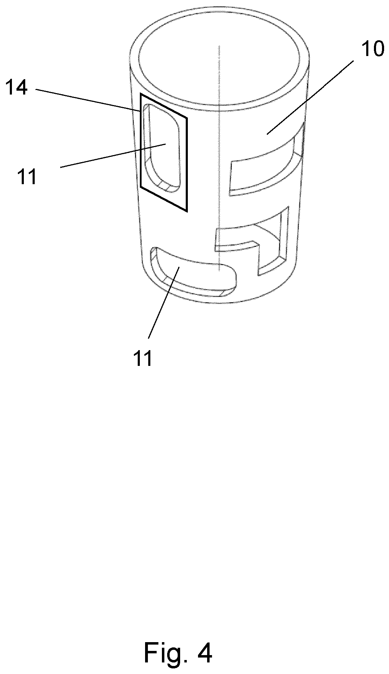

Figur 4 zeigt im Detail das Außenteil 10 des in Figur 2 gezeigten Ventilkerns 7. Das Außenteil 10 ist in Form einer Hülse ausgebildet, wobei in die Umfangswandung mehrere Durchbrechungen 11 eingebracht sind. Den Durchbrechungen 11 ist jeweils eine Dichtkontur 14 zugeordnet, welche den Bereich der Kanten der Durchbrechungen 11 angeordnet ist. Die Dichtkontur 14 ist aus thermoplastischem Elastomer ausgebildet und ist fest mit dem Außenteil 10 verbunden.

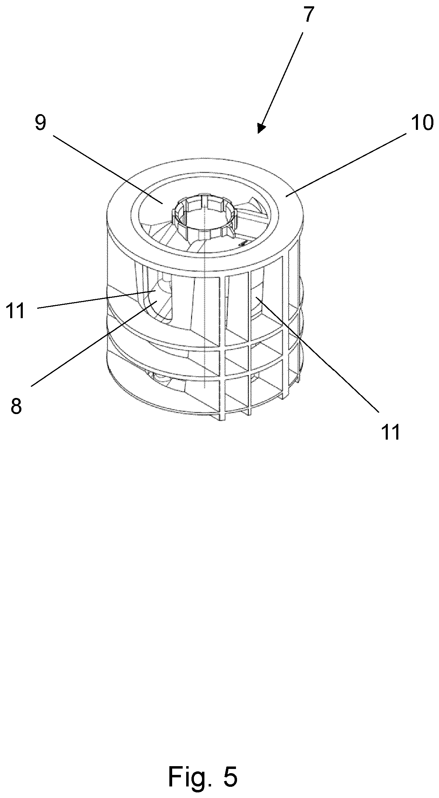

Figur 5 zeigt eine alternative Ausgestaltung des in Figur 2 gezeigten Ventilkerns 7. Bei der vorliegenden Ausgestaltung ist auch das Außenteil 10 rippenartig ausgebildet, sodass die Kanalstruktur 8 eine besonders komplexe Gestalt aufweisen kann, welche sowohl in dem Innenteil 9 als auch dem Außenteil ausgebildet ist.

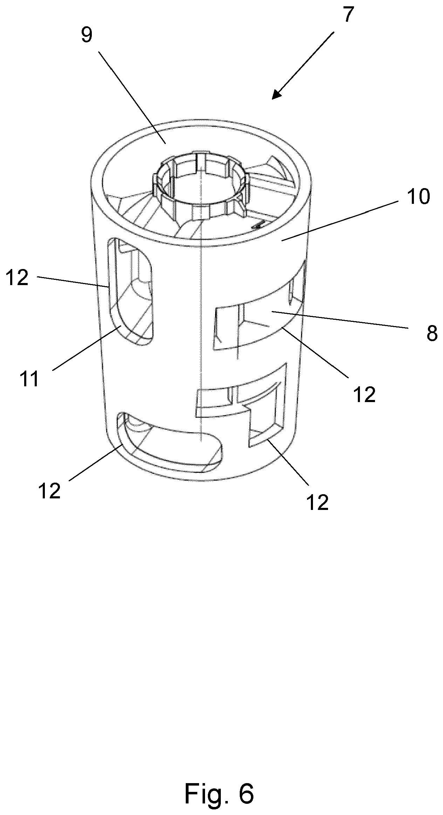

Figur 6 zeigt den Ventilkern 7 gemäß Figur 2. Bei der vorliegenden Ausgestaltung ist zu erkennen, dass das Innenteil 9 und das Außenteil 10 über eine Schweißverbindung 12 stoffschlüssig miteinanderverbunden sind. Die Schweißverbindung ist in den Bereichen der Durchbrechungen 11 angeordnet und linienförmig ausgebildet. Neben der sicheren Verbindung von Innenteil 9 und Außenteil 10 kann durch die Schweißverbindung 12 sichergestellt werden, dass im Bereich der Durchbrechungen 11 keine Leckagen innerhalb des Ventilkerns 7 auftreten.

## Patentansprüche

1. Rotationsventil (1), umfassend ein Ventilgehäuse (2) mit einer Ventilkammer (3), wobei die Ventilkammer (3) zumindest eine Kammerwand (4) aufweist, in die zumindest zwei Fluidöffnungen (5) eingebracht sind, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch in der Ventilkammer (3) gelagert ist, wobei der Ventilkern (7) zumindest zweiteilig ausgebildet ist, wobei der Ventilkern (7) zumindest ein Innenteil (9) und ein Außenteil (10) aufweist, wobei das Außenteil (10) das zumindest eine Innenteil (9) zumindest teilweise umfangsseitig umgibt, wobei das Außenteil (10) als Hülse ausgebildet ist und das zumindest eine Innenteil (9) aufnimmt und wobei das zumindest eine Innenteil (9) rippenartig ausgebildet ist, **dadurch gekennzeichnet, dass** der Ventilkern (7) aus Kunststoff ausgebildet ist.

2. Rotationsventil nach Anspruch 1, **dadurch gekennzeichnet, dass** in das Außenteil (10) Durchbrechungen (11) eingebracht sind.

3. Rotationsventil nach Anspruch 1 oder 2, **dadurch gekennzeichnet, dass** die Kanalstruktur (8) in dem zumindest einen Innenteil (9) ausgebildet ist.

4. Rotationsventil nach einem der Ansprüche 1 bis 3, **dadurch gekennzeichnet, dass** das zumindest eine Innenteil (9) und das Außenteil (10) stoffschlüssig miteinander verbunden sind.

5. Rotationsventil nach einem der Ansprüche 1 bis 4, **dadurch gekennzeichnet, dass** das zumindest eine Innenteil (9) und das Außenteil (10) formschlüssig miteinander verbunden sind.

6. Rotationsventil nach einem der Ansprüche 1 bis 5, **dadurch gekennzeichnet, dass** das Außenteil (10) des Ventilkerns (7) zumindest abschnittsweise dichtend an der Kammerwand (4) der Ventilkammer (3) anliegt.

7. Rotationsventil nach einem der Ansprüche 1 bis 6, **dadurch gekennzeichnet, dass** dem Außenteil (10) und/oder dem zumindest einen Innenteil (9) eine Dichtkontur zugeordnet ist.

8. Rotationsventil nach einem der Ansprüche 1 bis 7, **dadurch gekennzeichnet, dass** in dem Außenteil (10) die Kanalstruktur (8) ausgebildet ist.

9. Rotationsventil nach einem der Ansprüche 1 bis 8, **dadurch gekennzeichnet, dass** der Ventilkern (7) mehrere Außenteile (10) aufweist.

10. Rotationsventil nach einem der Ansprüche 1 bis 9, **dadurch gekennzeichnet, dass** das Ventilgehäuse (2) und der Ventilkern (7) aus Kunststoff ausgebildet sind.

11. Temperierkreislauf eines Fahrzeugs, insbesondere eines Elektrofahrzeugs, umfassend zumindest ein Rotationsventil (1) nach einem der vorherigen Ansprüche.

## Claims

1. A rotary valve (1), comprising a valve housing (2) having a valve chamber (3), the valve chamber (3) having at least one chamber wall (4) in which at least two fluid openings (5) are formed, the valve chamber (3) accommodating a valve core (7), the valve core (7) being provided with a channel structure (8) which interacts with the fluid openings (5), the valve core (7) being rotatably mounted in the valve chamber (3), the valve core (7) being formed in at least two parts, the valve core (7) having at least one inner part (9) and an outer part (10), the outer part (10) at least partially surrounding the at least one inner part (9) circumferentially, the outer part (10) being formed as a sleeve and accommodating the at least one inner part (9), and the at least one inner part (9) being formed in a rib-like manner, **characterized in that** the valve core (7) is made of plastics material.

2. The rotary valve according to claim 1, **characterized in that** apertures (11) are formed in the outer part (10).

3. The rotary valve according to claim 1 or 2, **characterized in that** the channel structure (8) is formed in the at least one inner part (9).

4. The rotary valve according to any of claims 1 to 3, **characterized in that** the at least one inner part (9) and the outer part (10) are integrally bonded to one another.

5. The rotary valve according to any of claims 1 to 4, **characterized in that** the at least one inner part (9) and the outer part (10) are form-fittingly interconnected.

6. The rotary valve according to any of claims 1 to 5, **characterized in that** the outer part (10) of the valve core (7) lies sealingly, at least in part, against the chamber wall (4) of the valve chamber (3).

7. The rotary valve according to any of claims 1 to 6, **characterized in that** a sealing contour is assigned to the outer part (10) and/or the at least one inner part (9).

8. The rotary valve according to any of claims 1 to 7, **characterized in that** the channel structure (8) is formed in the outer part (10).

9. The rotary valve according to any of claims 1 to 8, **characterized in that** the valve core (7) has a plurality of outer parts (10).

10. The rotary valve according to any of claims 1 to 9, **characterized in that** the valve housing (2) and the valve core (7) are made of plastics material.

11. A temperature control circuit of a vehicle, in particular an electric vehicle, comprising at least one rotary valve (1) according to any of the preceding claims.

## Revendications

1. Soupape rotative (1), comprenant un boîtier de soupape (2) comportant une chambre de soupape (3), dans laquelle la chambre de soupape (3) présente au moins une paroi de chambre (4) dans laquelle sont ménagées au moins deux ouvertures pour fluide (5), dans laquelle la chambre de soupape (3) reçoit un noyau de soupape (7), dans laquelle le noyau de soupape (7) est pourvu d'une structure formant canal (8) qui coopère avec les ouvertures pour fluide (5), dans laquelle le noyau de soupape (7) est monté rotatif dans la chambre de soupape (3), dans laquelle le noyau de soupape (7) est réalisé au moins en deux parties, dans laquelle le noyau de soupape (7) présente au moins une partie intérieure (9) et une partie extérieure (10), dans laquelle la partie extérieure (10) entoure au moins partiellement côté circonférentiel l'au moins une partie intérieure (9), dans laquelle la partie extérieure (10) est réalisée sous forme de douille et reçoit l'au moins une partie intérieure (9) et dans laquelle l'au moins une partie intérieure (9) est réalisée en forme de nervure, **caractérisée en ce que** le noyau de soupape (7) est réalisé en matière plastique.

2. Soupape rotative selon la revendication 1, **caractérisée en ce que** des percées (11) sont ménagées dans la partie extérieure (10).

3. Soupape rotative selon la revendication 1 ou 2, **caractérisée en ce que** la structure formant canal (8) est réalisée dans l'au moins une partie intérieure (9).

4. Soupape rotative selon l'une des revendications 1 à 3,
**caractérisée en ce que** l'au moins une partie intérieure (9) et la partie extérieure (10) sont reliées l'une à l'autre par liaison de matière.

5. Soupape rotative selon l'une des revendications 1 à 4,
**caractérisée en ce que** l'au moins une partie intérieure (9) et la partie extérieure (10) sont reliées l'une à l'autre par complémentarité de forme.

6. Soupape rotative selon l'une des revendications 1 à 5,
**caractérisée en ce que** la partie extérieure (10) du noyau de soupape (7) s'applique de manière étanche au moins dans certaines sections contre la paroi de chambre (4) de la chambre de soupape (3).

7. Soupape rotative selon l'une des revendications 1 à 6,
**caractérisée en ce qu'**un contour d'étanchéité est associé à la partie extérieure (10) et/ou à l'au moins une partie intérieure (9).

8. Soupape rotative selon l'une des revendications 1 à 7,
**caractérisée en ce que** la structure formant canal (8) est réalisée dans la partie extérieure (10).

9. Soupape rotative selon l'une des revendications 1 à 8,
**caractérisée en ce que** le noyau de soupape (7) présente plusieurs parties extérieures (10).

10. Soupape rotative selon l'une des revendications 1 à 9,
**caractérisée en ce que** le boîtier de soupape (2) et le noyau de soupape (7) sont réalisés en matière plastique.

11. Circuit de régulation de température d'un véhicule, en particulier d'un véhicule électrique, comprenant au moins une soupape rotative (1) selon l'une des revendications précédentes.
